Europäisches Patentamt

European Patent Office

Office européen des brevets

(11) Veröffentlichungsnummer: **0 512 139 A1**

## (12) EUROPÄISCHE PATENTANMELDUNG

(21) Anmeldenummer: **91107431.8**

(22) Anmeldetag: **07.05.91**

(51) Int. Cl.5: **F16H 25/20**, F16K 31/04

(43) Veröffentlichungstag der Anmeldung:
**11.11.92 Patentblatt 92/46**

(84) Benannte Vertragsstaaten:
**AT DE ES FR GB IT**

(71) Anmelder: **SIEMENS AKTIENGESELLSCHAFT**
**Wittelsbacherplatz 2**
**W-8000 München 2(DE)**

(72) Erfinder: **Pohr, Heinz, Dipl.-Ing.**
**Buchschwabacher Strasse 19**
**W-8501 Rosstal(DE)**

(54) **Elektromotorischer Stellantrieb.**

(57) Die Erfindung betrifft einen elektromotorischen Stellantrieb, in dessen Gehäuse (1,2) eine mit einem Verstellglied (14) koppelbare, mit einem Außengewinde versehene Verstellspindel (7) verdrehgesichert, jedoch axial beweglich angeordnet ist, auf deren Außengewinde eine mit einem entsprechenden Innengewinde versehene Spindelmutter (6) aufgeschraubt ist, welche drehbar gelagert und durch ein mit einem Elektromotor gekoppeltes Antriebselement (5) in beiden Drehrichtungen antreibbar ist. Bei einem solchen Stellantrieb wird bei Ausfall der elektrischen Energie das Anfahren einer Sicherheitsstellung dadurch ermöglicht, daß die Spindelmutter (6) axial beweglich mit ihrem Antriebselement (5) gekuppelt und in einem Aufnahmeteil (15) axialfest jedoch drehbar gelagert ist, das seinerseits axial verschiebbar jedoch verdrehungsgesichert im Gehäuse (1) angeordnet ist, daß ferner die Spindelmutter (6) und das Aufnahmeteil (15) gemeinsam durch einen permanent auf sie einwirkenden Kraftspeicher (21 bzw.24) axial verstellbar und durch eine elektromagnetisch wirkende Haltevorrichtung (18) in ihrer Ausgangslage gegen die Verstellwirkung des Kraftspeichers (21 bzw.24) gehalten sind.

FIG 1

EP 0 512 139 A1

Die Erfindung betrifft einen elektromotorischen Stellantrieb gemäß dem Oberbegriff des Anspruchs 1.

Ein solcher elektromotorischer Stellantrieb ist durch die DE-A-38 04 097 bekannt. Fällt die elektrische Versorgungsspannung aus, so behält dieser Stellantrieb seine jeweils eingenommene Stellung bei. Es gibt jedoch Anwendungsfälle, bei denen es erforderlich ist, daß der Stellantrieb bei Ausfall der Hilfsenergie noch in eine Sicherheitsstellung gefahren werden kann. In solchen Fällen hat man bisher pneumatisch betätigte Stellantriebe eingesetzt.

Der Erfindung liegt die Aufgabe Zugrunde, einen elektromotorisch betätigten Stellantrieb so auszubilden, daß dieser bei Ausfall der elektrischen Energie noch in eine gewünschte Sicherheitsstellung gebracht werden kann.

Die Lösung der gestellten Aufgabe gelingt durch die im Kennzeichen des Anspruchs 1 angegebenen Merkmale.

Bei Ausfall oder gezieltem Abschalten der Versorgungsspannung verliert die elektromagnetische Haltevorrichtung ihre Haltekraft, so daß der Kraftspeicher das Aufnahmeteil und die darin axial fest gelagerte Spindelmutter in axialer Richtung verstellen kann. Dabei nimmt die Spindelmutter die mit ihr in Eingriff stehende Verstellspindel und das mit der Verstellspindel verbundene Verstellglied mit, so daß dieses in die gewünschte Sicherheitsstellung gelangt.

Eine kompakte Bauform für das Aufnahmeteil ergibt sich gemäß der Ausgestaltung des Stellantriebs nach Anspruch 2. Zur kompakten Bauform trägt ferner bei, daß den Magnetpolen eines im Gehäuse des Stellantriebs angeordneten Elektromagneten ein mit dem Aufnahmeteil verbundener Magnetanker zugeordnet ist. Ein solcher Magnetanker kann einstückig am Aufnahmeteil angeformt sein.

Bei einem gemäß den Merkmalen des Anspruchs 4 ausgestalteten Stellantrieb ergibt sich von der konstruktiven Seite her ein relativ einfacher Aufbau des Elektromagneten und des mit dem Aufnahmeteil verbundenen Magnetankers. Die von dem Elektromagneten aufzubringende Haltekraft hat dabei die gleiche Wirkungsrichtung wie die vom Kraftspeicher auf das Aufnahmeteil ausgeübte Verschiebekraft und ist somit entsprechend hoch.

Eine von dem Elektromagneten aufzubringende geringere Haltekraft läßt sich bei einem Stellantrieb gemäß Anspruch 5 erreichen. Der wesentliche Anteil der Abstützung des Aufnahmeteiles gegen die Verschiebekraft des Kraftspeichers wird von dem auf der schiefen Ebene aufruhenden Stützteil übernommen. Durch den Elektromagneten muß nur noch eine der durch die schiefe Ebene bedingten, in Umfangsrichtung wirkenden Kraftkomponenten entsprechende Haltekraft aufgebracht werden. Der Elektromagnet kann somit kleiner dimensioniert werden und es ergibt sich auch ein geringerer Energieverbrauch.

Reibungsverluste lassen sich bei einem derart ausgestalteten Stellantrieb dadurch gering halten, daß als Stützteil drehbar gelagerte Stützrollen vorgesehen sind. Von Vorteil ist ferner, daß im Anschluß an die schiefe Ebene eine senkrechte Führungsnut vorgesehen ist. Hierdurch ergibt sich eine eindeutige Positionierung des Aufnahmeteils nach der ausgeführten Verschwenkbewegung. Ferner wird auch die sichere Rückstellung des Aufnahmeteils in seine Ausgangslage gewährleistet, da der mit dem Aufnahmeteil verbundene Magnetanker in einer definierten Lage zum Elektromagneten verbleibt.

Die Ansprüche 8 bis 10 beschreiben konstruktive Ausführungsvarianten des Kraftspeichers. Ein derartiger Kraftspeicher kann vorteilhafter Weise bei einem nach Anspruch 4 ausgestalteten Stellantrieb verwendet werden. Die Ausführungsvariante des Kraftspeichers gemäß den Ansprüchen 11 und 12 führt insbesondere bei einem Stellantrieb gemäß Anspruch 5 zu einer kompakten Bauform.

Anhand der Zeichnung werden nachfolgend Ausführungsbeispiele eines Stellantriebs erläutert. Es zeigt:

FIG 1 eine schematische Darstellung eines Stellantriebs,

FIG 2 in einem Teillängsschnitt einen Stellantrieb in normaler Betriebsstellung,

FIG 3 den Stellantrieb nach FIG 2 in der Stellung nach Abschaltung der elektromagnetischen Haltevorrichtung,

FIG 4 in einem Teillängsschnitt einen Stellantrieb, der eine andere Ausführungsform der Halterung des Aufnahmeteiles für die Spindelmutter aufweist,

FIG 5 einen Stellantrieb im Querschnitt entlang der Linie V-V in FIG 4,

FIG 6 eine Teilansicht in Richtung des Pfeiles A in FIG 4.

Mit 1 ist der untere und mit 2 der obere Teil des Gehäuses eines Stellantriebs bezeichnet. Im oberen Gehäuseteil 2 ist im wesentlichen der Antriebsteil des Stellantriebs angeordnet, der aus einer von einem nicht dargestellten Elektromotor angetriebenen Schnecke 3 besteht, die mit einem Schneckenrad 4 in Eingriff steht, das mit einer Hohlwelle 5 verbunden ist, die ihrerseits verdrehfest mit einer axial verschieblichen Spindelmutter 6 gekoppelt ist. Die Spindelmutter 6 ist mit ihrem Innengewinde auf das Außengewinde einer Verstellspindel 7 aufgeschraubt. An der Verstellspindel 7 ist ein Sperrad 8 angeordnet, das mindestens eine radial vorstehende Sperrleiste 9 aufweist. Diese Sperrleiste 9 greift in eine Sperrnut 10 ein, die in der Durchführungsbohrung 11 eines Ringbundes 12 vorgesehen ist, der an dem den unteren Gehäuseteil 1 verschließenden Gehäusedeckel 13 in das Gehäuseinnere axial vorspringend angeformt ist. Die in die Sperrnut 10 eingreifende Sperrleiste 9 sichert die Verstellspindel 7 gegen Verdrehen, läßt jedoch eine axiale Bewegung der Verstellspindel 7 zu. Somit kann beispielsweise ein mit der Verstellspindel 7 verbundenes Ventil 14 zwischen seiner Durchlaß- und Sperr-Stellung hin- und herbewegt werden.

Die Spindelmutter 6 ist in einem als Hohlzylinder 15 ausgebildeten Aufnahmeteil drehbar gelagert. Die Lageranordnung 16 der Spindelmutter 6 ist in dem Hohlzylinder 15 in axialer Richtung unbeweglich festgelegt. An dem Hohlzylinder 15 ist ein nach radial außen vorstehender Umlaufrand 17 angeformt. Der Umlaufrand 17 erstreckt sich unter einen ringförmigen Elektomagneten 18 und wirkt als Magnetanker. Durch einen am Umfang des Umlaufrandes 17 radial vorspringenden und in eine Gehäusenut 19 ragenden Noppen 20 wird der Hohlzylinder 15 zwar gegen Verdrehen gesichert, kann jedoch nach einem Abschalten des Elektromagneten 18 unter der Wirkung eines in der Hohlwelle 5 angeordneten, beispielsweise aus einem Tellerfederpaket 21 bestehenden Kraftspeichers in axialer Richtung verstellt werden. Das Tellerfederpaket 21 ist zwischen einem inneren Ringvorsprung 22 der Hohlwelle 5 und einem Rohransatz 23 der Spindelmutter 6 abgestützt.

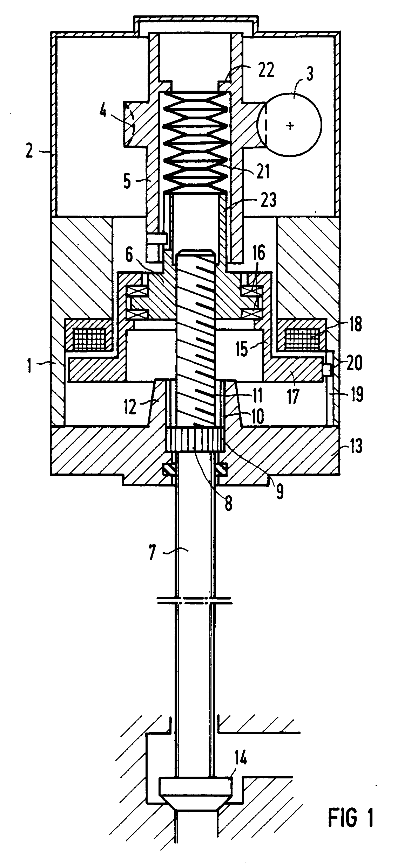

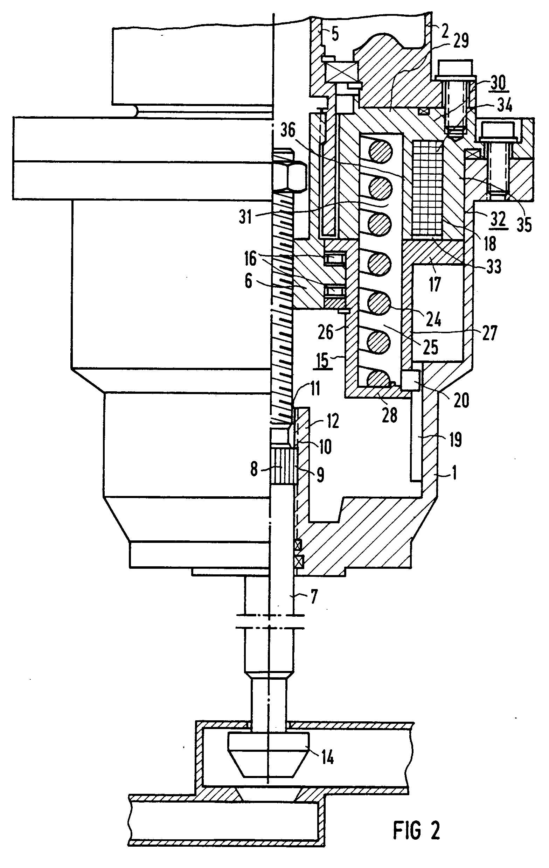

Bei den in den FIG 2 bis 4 dargestellten konstruktiven Ausführungsformen eines Stellantriebs sind die einzelnen Bauteile, die funktionsmäßig den Bauteilen der schematischen Darstellung nach FIG 1 entsprechen, mit den gleichen Bezugszeichen versehen.

Die in FIG 2 gezeigte Ausführungsform eines Stellantriebs unterscheidet sich gegenüber der in FIG 1 dargestellten Ausführungsform durch eine andere Ausgestaltung des Kraftspeichers. Dieser wird nämlich durch eine Schraubenfeder 24 gebildet. Die Schraubenfeder 24 ist in einen Ringraum 25 eingesetzt, der zwischen der inneren und äußeren Zylinderwand 26 und 27 des doppelwandig ausgeführten Hohlzyinders 15 gebildet ist. An ihrem einen Ende ist die Schraubenfeder 24 an einer den Ringraum 25 verschließenden Querwand 28 abgestützt und an ihrem anderen Ende an der Abschlußwand 29 eines weiteren Ringraumes 31, der in einem zwischen dem unteren und oberen Gehäuseteil 1 und 2 eingefügten Zwischengehäuse 30 ausgebildet ist. Damit erhält die Schraubenfeder 24 eine stabile Lage und gute Ausrichtung.

In das Zwischengehäuse 30 ist ferner der Elektromagnet 18 integriert. Hierzu ist in der äußeren Ringwand 32 des Zwischengehäuses 30 durch einen Einstich ein ringförmiger Aufnahmeraum 33 gebildet, in den eine Ringspule 34 als Erregerwicklung des Elektromagneten 18 eingesetzt ist. Somit weist der Elektromagnet 18 im Querschnitt eine U-Form auf. Die durch den Einstich in die Ringwand 32 gebildeten U-Schenkel 35 und 36 wirken als Magnetpole, denen der Umlaufrand 17 des Hohlzylinders 15 als Magnetanker zugeordnet ist. Bei erregtem Elektromagneten 18 liegt der Hohlzylinder 15 mit seinem Umlaufrand 17 an den Magnetpolen 35 und 36 an, wodurch die Schraubenfeder 24 zusammengepreßt gehalten wird.

Die Betätigung des Stellantriebes und damit des mit diesem verbundenen Ventiles 14 erfolgt normalerweise über den die Schnecke 3 antreibenden Elektromotor. Durch diesen wird über die Schnecke 3 und das Schneckenrad 4 die Hohlwelle in Drehung versetzt. Diese Drehbewegung wird von der Hohlwelle 5 auf die Spindelmutter 6 übertragen. Die Spindelmutter 6 dreht sich auf dem Außengewinde der Verstellspindel 7 und verschiebt dabei die gegen Verdrehen gesicherte Verstellspindel 7 in axialer Richtung. Je nach Drehrichtung der Spindelmutter 6 wird die Verstellspindel 7 und das mit ihr gekoppelte Ventil 14 in der einen oder der anderen Richtung bewegt. Das Ventil 14 kann somit über den Stellantrieb in seine "Durchlaß"- oder "Sperr"-Stellung gesteuert werden.

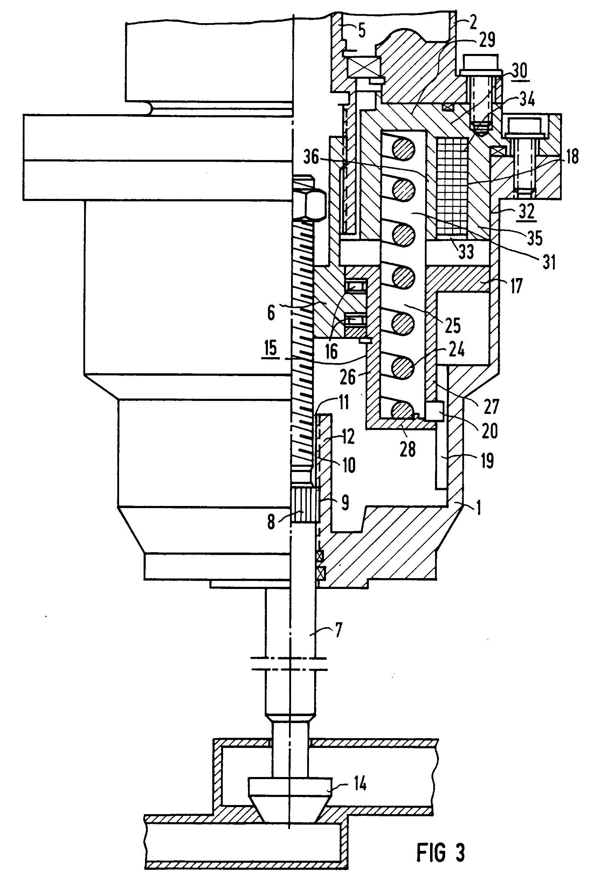

Zusätzlich zu dieser über den Elektromotor bewirkten axialen Bewegung der Verstellspindel 7 kann diese auch über die als Kraftspeicher wirkende Schraubenfeder 24 in axialer Richtung bewegt werden. Diese Möglichkeit der Verstellung ist in der FIG 3 dargestellt. Wird die Versorgungsspannung des Elektromagneten 18 gezielt abgeschaltet oder fällt diese aus, dann verliert der Elektromagnet 18 seine Haltekraft. Die zusammengepreßte Schraubenfeder 24 kann sich daraufhin entspannen und drückt den Hohlzylinder 15 von dem Elektromagneten 18 weg. Dabei wird die im Hohlzylinder 15 axial fest angeordnete Spindelmutter 6 und über diese die Verstellspindel 7 mitgenommen und damit das Ventil 14 in die entsprechende Stellung gebracht. In FIG 3 ist das Ventil 14 dabei in seiner Sperrstellung gezeigt. Durch eine entsprechende Ausbildung des Ventils 14 ist es auch möglich, dieses mittels des Kraftspeichers in seine Durchlaßstellung zu steuern.

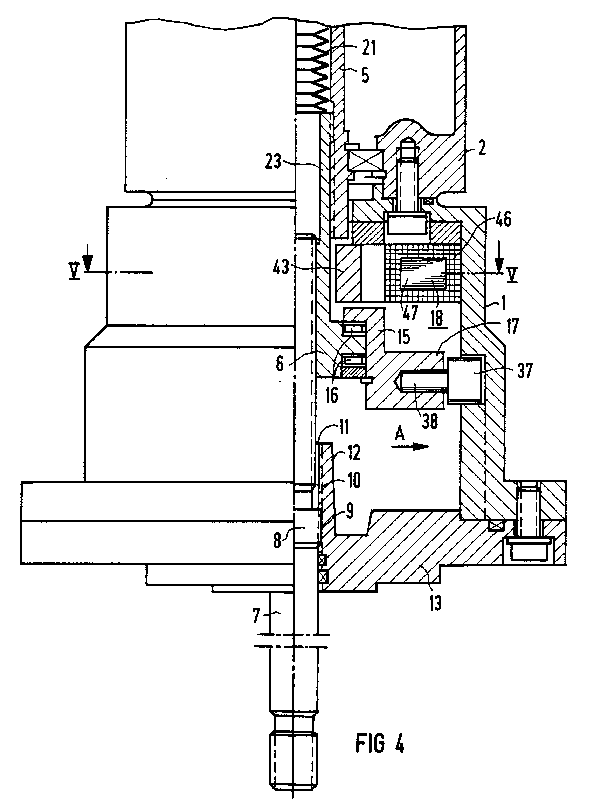

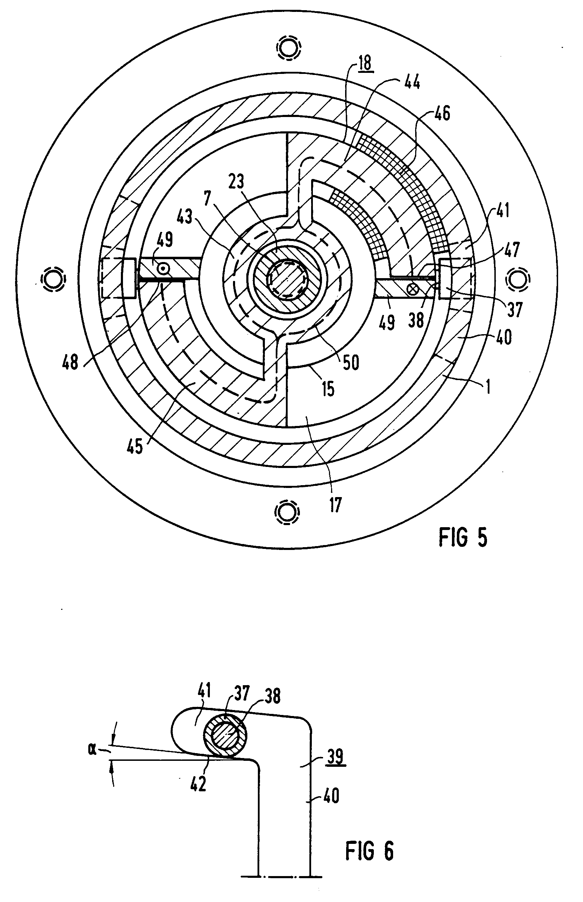

Die FIG 4 zeigt eine weitere Ausführungsvariante eines Stellantriebes. Bei diesem Stellantrieb ist die Abstützung des Hohlzylinders 15 gegen die Verschiebekraft des Kraftspeichers in anderer Weise gelöst. Am Umfang des Umlaufrandes 17 des Hohlzylinders 15 ist mindestens eine Stützrolle 37 radial vorstehend angeordnet, die auf einem Achszapfen 38 drehbar gelagert ist. Die Stützrolle 37 greift in eine in der Wand des unteren Gehäuseteils 1 ausgebildete Führungsnut 39 ein. Wie die FIG 6 zeigt, weist diese Führungsnut 39 einen senkrecht verlaufenden Nutabschnitt 40 und daran anschließend einen in Umfangsrichtung verlaufenden Nutabschnitt 41 auf.

Zumindest die zur Abstützung der Stützrolle 37 dienende Nutkante 42 des in Umfangsrichtung verlaufenden Nutabschnittes 41 steigt mit einem Winkel α gegenüber der Waagrechten an. Der Winkel α ist so gewählt, daß unter Berücksichtigung der zwischen der Nutkante 42 und der Stützrolle 37 wirkenden Reibungskraft und der von dem Kraftspeicher ausgehenden Verschiebekraft ein Abrollen der Stützrolle 37 auf der schrägen Nutkante 42 erfolgt. Aus Symmetrie- und Balancegründen werden zweckmäßigerweise zwei Stützrollen 37 an dem Umlaufrand 17 gegenüberliegend vorgesehen.

Während des normalen Betriebes des Stellantriebes wird ein Abrollen der Stützrollen 37 durch die Haltekraft des Elektromagneten 18 verhindert. Wie aus der FIG 5 erkennbar, weist der Elektromagnet 18 einen S-förmigen Magnetkern 43 auf. Mindestens auf einem der S-Bögen 44 und 45 ist eine Erregerspule 46 angeordnet. Die freien Enden 47 und 48 der S-Bögen 44 und 45 bilden die Magnetpole des Elektromagneten 18. Diesen Magnetpolen sind als Magnetanker wirkende, mit dem Hohlzylinder 15 verbundene, axial gerichtete Fahnen 49 zugeordnet. Durch eine gestrichelte Linie 50 ist der Verlauf des magnetischen Flusses angedeutet. Durch die magnetische Haltekraft des Elektromagneten 18 werden die Fahnen 49 in Anlage an den freien Enden 47 und 48 der S-Bögen 44 und 45 gehalten. In dieser Stellung der Fahnen 49 befinden sich die Stützrollen 37 etwa an der in FIG 6 gezeigten Stelle der schräg verlaufenden Nutkante 42.

Die von dem Kraftspeicher, der bei einer solchen Ausbildung der Haltevorrichtung zweckmäßigerweise im Innenraum der Hohlwelle 5 angeordnet ist, ausgehende Verschiebekraft wirkt in axialer Richtung der Verstellspindel 7 und wird daher von den auf den Nutkanten 42 aufruhenden Stützrollen 37 aufgenommen. Durch die Schräge der Nutkante 42 ergibt sich aus der axial gerichteten Verschiebekraft eine in Umfangsrichtung wirkende Kraftkomponente. Gegen diese Kraftkomponente wird der Hohlzylinder 15 durch die Haltekraft des Elektromagneten 18 in seiner Ausgangslage gehalten.

Die Betätigung des Stellantriebes während des normalen Betriebsablaufes erfolgt in der gleichen Weise wie bei dem Stellantrieb nach FIG 2. Zusätzlich kann auch bei dem Stellantrieb nach der FIG 4 ein mit der Verstellspindel gekoppeltes Verstellglied, z.B. ein Ventil 14, bei gezieltem Abschalten oder bei Ausfall der Versorgungsspannung in eine gewünschte Sicherheitsstellung gebracht werden. Mit dem Wegfall der Versorgungsspannung des Elektromagneten 18 verliert dieser seine auf die Fahne 49 und damit auf den Hohlzylinder 15 ausgeübte Haltekraft. Damit kann durch die von der axialen Verschiebekraft des Kraftspeichers, z.B. dem Tellerfederpaket 21 ausgehende, in Umfangsrichtung wirkende Kraftkomponente eine Verdrehung des Hohlzylinders 15 bewirken. Dabei bewegen sich die Stützrollen 37 auf den senkrecht verlaufenden Nutabschnitt 40 zu. Ist der Hohlzylinder 15 soweit verschwenkt, daß sich die Stützrollen 37 in dem senkrecht verlaufenden Nutabschnitt 40 befinden, dann kann der Hohlzylinder 15 durch die Verschiebekraft des Tellerfederpaketes 21 in axialer Richtung bewegt werden. Der Hohlzylinder 15 nimmt dabei über die axialfest mit ihm verbundene Spindelmutter 6 die Verstellspindel 7 mit und bringt dadurch das mit der Verstellspindel gekoppelte Verstellglied, z.B. das Ventil 14 in die gewünschte Sicherheitsstellung.

Der Stellantrieb kann in Prozeßsteuerungen miteinbezogen werden. Es kann durch Ansteuern von zwischen den jeweiligen Endstellungen eines Ventils 14 liegenden Zwischenstellungen eine Durchflußregelung erfolgen. Hierzu wird der Stellantrieb über seinen Elektromotor entsprechend betätigt. Falls bestimmte Ereignisse im Prozeßablauf beispielsweise eine Schnellabschaltung des Ventiles 14 erfordern, kann diese durch die Abschaltung des Elektromagneten erreicht werden. Durch den Kraftspeicher des Stellantriebs wird das Ventil 14 unmittelbar in seine Sicherheitsstellung bewegt.

Ist die Verstellspindel 7 einmal durch den Kraftspeicher verstellt worden, dann kann sie mit Hilfe des dem Stellantrieb zugeordneten Elektromotors wieder in ihre normale Betriebsstellung gebracht werden. Hierzu wird dem Stellantrieb ein Ansteuerbefehl in Ausschieberichtung der Verstellspindel 7 gegeben. Da diese aber durch den Kraftspeicher bereits in die entsprechende Endlage verbracht ist, schraubt sich die Spindelmutter 6 an der Verstellspindel 7 nach oben und nimmt dabei den hohlzylinder 15 mit, bis dieser wieder seine Ausgangslage erreicht hat. Durch den wieder eingeschalteten Elektromagneten 18 wird der Hohlzylinder dann entweder direkt (Ausführungsvariante FIG 2) oder indirekt (Ausführungsvariante FIG 4) in der Ausgangslage gehalten. Bei dem Anheben des Hohlzylinders 15 wird die Schraubenfeder 24 bzw. das Tellerfederpaket 21 wieder gespannt. Diese Federspeicher werden beim Normalbetrieb des Stellantriebes nicht beansprucht, d.h. es erfolgt während des Normalbetriebes keine Verformung der Federn, so daß diese eine hohe Lebensdauer aufweisen.

Es besteht ferner die Möglichkeit, die axiale Bewegung der Verstellspindel 7 in eine Schwenkbewegung umzusetzen. Damit ist auch bei Schwenkantrieben das Anfahren einer Sicherheitsstellung möglich.

Zur Lageüberwachung können dem Hohlzylinder 15 ferner Endschalter zugeordnet werden.

**Patentansprüche**

1.  Elektromotorischer Stellantrieb, in dessen Gehäuse (1,2) eine mit einem Verstellglied (14) koppelbare, mit einem Außengewinde versehene Verstellspindel (7) verdrehgesichert, jedoch axial beweglich angeordnet ist, auf deren Außengewindeeine mit einem entsprechenden Innengewinde versehene Spindelmutter (6) aufgeschraubt ist, welche drehbar gelagert und durch ein mit einem Elektromotor gekoppeltes Antriebselement (5) in beiden Drehrichtungen antreibbar ist,
    **dadurch gekennzeichnet,**
    daß die Spindelmutter (6) axial beweglich mit ihrem Antriebselement (5) gekuppelt und in einem Aufnahmeteil (15) axialfest jedoch drehbar gelagert ist, das seinerseits axial verschiebbar jedoch verdrehungsgesichert im Gehäuse (1) angeordnet ist, daß ferner die Spindelmutter (6) und das Aufnahmeteil (15) gemeinsam durch einen permanent auf sie einwirkenden Kraftspeicher (21 bzw.24) axial verstellbar und durch eine elektromagnetisch wirkende Haltevorrichtung (18) in ihrer Ausgangslage gegen die Verstellwirkung des Kraftspeichers (21 bzw.24) gehalten sind.

2.  Stellantrieb nach Anspruch 1,
    **dadurch gekennzeichnet,**
    daß das Aufnahmeteil als Hohlzylinder (15) ausgebildet ist, mit dessen Innenwand die Lageranordnung (16) der Spindelmutter (6) axial fest verbunden ist.

3.  Stellantrieb nach Anspruch 1 oder 2,
    **dadurch gekennzeichnet,**
    daß im Gehäuse (1) des Stellantriebes ein Elektromagnet (18) angeordnet ist, dessen Magnetpolen (35,36 bzw.47,48) ein mit dem Aufnahmeteil (15) verbundener Magnetanker (17 bzw.49) zugeordnet ist.

4.  Stellantrieb nach Anspruch 3,
    **dadurch gekennzeichnet,**
    daß der Elektromagnet (18) ringförmig ausgebildet ist und seine Ringwand (32) einen U-förmigen Querschnitt aufweist, wobei zwischen den als Magnetpole wirkenden U-Schenkeln (35 und 36) eine Ringspule (34) eingefügt und am Hohlzylinder (15) ein sich gegenüber diesem radial erstreckender Umlaufrand (17) vorgesehen ist, der den Magnetanker bildet.

5.  Stellantrieb nach Anspruch 2 und 3,
    **dadurch gekennzeichnet,**
    daß ein eine Drehkraft auf den Hohlzylinder (15) ausübender Elektromagnet (18) vorgesehen und am Hohlzylinder (15) mindestens ein radial nach außen stehendes, auf einer am Gehäuse (1) ausgebildeten, sich über einen bestimmten Umfangswinkel erstreckenden schiefen Ebene (Nutkante 42) aufruhendes Stützteil (37) angeordnet ist, wobei die Drehkraft des Elektromagneten (18) im Sinne eines Haltens des Stützteils (37) auf der schiefen Ebene (42) wirkt, deren Steigung (Winkel ) so bemessen ist, daß bei fehlender Drehkraft des Elektromagneten (18) durch die Verschiebekraft des Kraftspeichers (21) ein Abgleiten des Stützteiles (37) auf der schiefen Ebene (42) bewirkt ist.

6.  Stellantrieb nach Anspruch 5,
    **dadurch gekennzeichnet,**
    daß als Stützteil eine drehbar gelagerte Stützrolle (37) vorgesehen ist.

7.  Stellantrieb nach Anspruch 5 oder 6,
    **dadurch gekennzeichnet,**
    daß sich an die schiefe Ebene (42) ein senkrecht verlaufender Nutabschnitt (40) anschließt.

8.  Stellantrieb nach einem oder mehreren der vorhergehenden Ansprüche, **dadurch gekennzeichnet,** daß als Kraftspeicher eine zwischen dem Gehäuse (1) und dem Aufnahmeteil (15) abgestützte Druckfeder (24) vorgesehen ist.

9.  Stellantrieb nach Anspruch 8 sowie einem oder mehreren der Ansprüche 2 bis 4, **dadurch gekennzeichnet,** daß als Druckfeder eine am Hohlzylinder (15) angreifende Schraubenfeder (24) vorgesehen ist.

10. Stellantrieb nach Anspruch 9,
    **dadurch gekennzeichnet,**
    daß der Hohlzylinder (15) doppelwandig ausgebildet und die Schraubenfeder (24) in den zwischen der inneren und äußeren Zylinderwand (26 und 27) gebildeten Ringraum (25) eingreift und mit ihrem entsprechenden Federende an einer die beiden Zylinderwände (26 und 27) verbindenen Querwand (28) anliegt.

11. Stellantrieb nach einem oder mehreren der Ansprüche 1 bis 7,
    **dadurch gekennzeichnet,**
    daß die Spindelmutter (6) über eine mit dem Elektromotor gekoppelte Hohlwelle (5) antreibbar ist, in deren Hohlraum als Kraftspeicher eine mit ihrem einen Ende an der Hohlwelle (5) und mit ihrem anderen Ende an der Spindelmutter (6) abgestützte Druckfeder (Tellerfederpaket 21) angeordnet ist.

12. Stellantrieb nach Anspruch 11,
    **dadurch gekennzeichnet,**
    daß als Druckfeder ein Tellerfederpaket (21) vorgesehen ist.

FIG 1

FIG 2

FIG 3

FIG 4

FIG 5

FIG 6

Europäisches
Patentamt

**EUROPÄISCHER RECHERCHENBERICHT**

Nummer der Anmeldung

EP    91 10 7431

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | DE-A-3 706 621 (WEYAND)<br>* Spalte 5, Zeile 26 - Spalte 11, Zeile 43 *<br>--- | 1 | F16H25/20<br>F16K31/04 |
| A | DE-A-2 022 863 (HASSA)<br>* das ganze Dokument *<br>--- | 1 | |
| A | DE-U-8 225 214 (SIEMENS)<br>* das ganze Dokument *<br><br>----- | 1 | |
| | | | **RECHERCHIERTE SACHGEBIETE (Int. Cl.5 )**<br><br>F16H<br>F16K |

Der vorliegende Recherchenbericht wurde für alle Patentansprüche erstellt

| Recherchenort | Abschlußdatum der Recherche | Prüfer |
|---|---|---|
| DEN HAAG | 12 DEZEMBER 1991 | Verelst P.E.J. |